# FASCICULE DE BREVET EUROPEEN

(11) **EP 2 742 269 B1**
(45) Date de publication et mention de la délivrance du brevet: **29.09.2021**
(21) Numéro de dépôt: 12758549.5
(22) Date de dépôt: 07.08.2012
(51) Int. Cl.: F16K 31/52, F16K 31/04, F02M 26/54, F02M 26/67, F02M 26/48

(54) **DISPOSITIF DE DOSAGE COMPACT**
VORRICHTUNG FÜR KOMPAKTE DOSIERUNG
COMPACT METERING DEVICE

(30) Priorité: 08.08.2011 FR 1157230
(43) Date de publication de la demande: 18.06.2014
(73) Titulaire: Sonceboz Automative SA, 2605 Sonceboz (CH)
(72) Inventeur: FOUCAUT, Antoine, F-70190 Montarlot les Rioz (FR); MELLERE, Cédric, F-25190 Soulce Cernay (FR)
(74) Mandataire: IP Trust
(86) Numéro de dépôt international: PCT/FR2012/051855
(87) Numéro de publication internationale: WO 2013/021133

(56) Documents cités:
- EP-A1- 1 319 879
- EP-B1- 1 526 272
- WO-A1-89/01105
- DE-A1- 10 336 976
- ANDRÉ M-O ET AL: "Torque-Motoren als Aktuatoren im Ansaug- und Abgasbereich", MTZ MOTORTECHNISCHE ZEITSCHRIFT, VIEWEG VERLAG, WIESBADEN, DE, vol. 67, no. 6, 1 juin 2006 (2006-06-01), pages 462-467, XP001519612, ISSN: 0024-8525
- None

## Description

### Domaine de l'invention

La présente invention concerne un dispositif de dosage comprenant un corps de vanne muni d'un clapet adapté pour se déplacer entre une position de fermeture et une position d'ouverture, un axe de transmission ayant une première extrémité reliée au clapet et une seconde extrémité reliée à un élément de came et un actionneur électrique rotatif comprenant un ensemble statorique et un ensemble rotorique rotatif autour d'un axe de rotation, l'ensemble rotorique comprenant une culasse magnétique portant un aimant rotorique.

Tous les moteurs thermiques pour automobile sont aujourd'hui équipés de système de dosage de fluide de différentes nature afin d'optimiser les rendements mécanique ou de réduire les émissions polluantes. Ces vannes de dosage sont le plus souvent commandées électriquement à partir de moteurs à courant continu ou d'actionneurs de type moteur couple.

Les vannes de dosage basées sur l'utilisation d'un moteur à courant continu associé à un réducteur mécanique offrent un niveau de fiabilité médiocre du fait de l'usure des balais du collecteur, mais aussi de l'usure des engrenages utilisés pour démultiplier le couple utile. En revanche ces solutions bénéficient d'un cout de revient assez bas puisque utilisant un moteur de faible taille. Elles constituent une grosse partie du marché des vannes EGR (acronyme de l'anglais « Exhaust gaz Recirculation », c'est-à-dire Recirculation des gaz d'échappement). Leurs inconvénients majeurs sont d'une part le manque de fiabilité et d'autre part l'encombrement pénalisé par l'intégration de la chaine cinématique, qui aboutit à une vanne peu compacte difficile à intégrer sur le moteur.

### Etat de la technique

On connait en particulier les brevets EP1091112A2 et EP1526271A1 qui présentent une vanne à recirculation de gaz comportant un moteur à courant continu associé à un réducteur mécanique et un système de transformation de mouvement à came. Ces solutions présentent un avantage en termes de force maximale exercé sur la soupape, du fait de la démultiplication importante du réducteur. En revanche l'encombrement global de la vanne est important et complique l'intégration sur l'environnement moteur. De plus le moteur à balais utilisé ainsi que les engrenages du réducteur présentent une usure inévitable qui réduit les performances de la vanne au cours du temps et ne permettent pas d'atteindre une durée de vie très élevée. Ces solutions sont intéressantes pour leur coût réduit mais ne permettent pas de répondre de façon satisfaisante aux contraintes de fiabilité et de compacité. De plus les environnements moteurs sont de plus en plus confinés et les conditions thermiques et vibratoires sont de plus en plus sévères.

Les vannes de dosage basées sur l'utilisation d'un moteur couple bénéficient d'une excellente fiabilité du fait de l'absence de réducteur et de la simplicité de la construction de ce type de moteur. La compacité de la solution est légèrement meilleure que les solutions avec moteurs à courant continu du fait de l'entrainement direct de la came sans réducteur mécanique. En revanche le cout de ces solutions utilisant des aimants en terre rare est généralement plus élevé. Le brevet DE102007036286A1 présente, figures 1 à 3, une telle solution dans laquelle le moteur couple comporte un axe de commande qui anime une came, laquelle collabore avec un galet solidaire de la soupape mobile en translation. Ce type de construction conduit encore à un encombrement important de la vanne car l'actionneur électrique se trouve déporté de l'axe de symétrie de la vanne de dosage. Cette contrainte de positionnement de l'actionneur par rapport à l'axe de soupape limite la compacité de la vanne complète.

Par ailleurs cette solution conduit à une séquence d'assemblage complexe et coûteuse pour la liaison de la came avec l'axe de l'actionneur.

En effet l'aimant du rotor ne conserve son aimantation qu'à la condition de ne pas dépasser une température limite proche de 220 degrés. Pour cette raison la soudure permettant de lier la came à l'arbre du rotor doit être faite de façon très locale, à l'aide d'une source de faible intensité de type rayon laser. Cette technologie est fiable à condition que les ajustements de diamètre entre les deux pièces soit excellents, ce qui conduit à des tolérances d'usinage serrées et donc des coûts associés importants.

De plus la mise en place du galet sur l'axe de la soupape se fait par l'intermédiaire d'une goupille chassée dans une chape, de façon à équilibrer les efforts du galet sur la soupape. Ce montage est délicat à réaliser et génère une procédure de montage automatique compliquée.

Par ailleurs le capteur de position rotatif intégré au moteur couple est utilisé pour asservir la position de la soupape. Cette solution est partiellement satisfaisante car elle ne permet pas de connaitre précisément la position de la soupape mais uniquement la position angulaire de la came. Dans ce cas le jeu angulaire de la transformation galet came fausse la précision de lecture de la position de la soupape et ne permet pas un contrôle optimal du dosage effectué.

On connait l'existence du brevet Allemand DE 10 2009 003 882 A1 qui décrit un concept permettant de positionner une source de champ magnétique sur la tige de la soupape et d'insérer un élément magnéto sensible dans la partie inférieure du moteur couple de façon à détecter directement la position de la soupape. Ce concept peut sembler intéressant dans le principe mais il n'est pas réaliste sur le plan industriel car, d'une part l'axe de soupape qui supporte la source de champ doit être constitué en acier inoxydable pour supporter la température et l'ambiance corrosive de ce milieu, cette nuance d'acier étant amagnétique et donc très pénalisante pour le niveau d'induction créé par la source de champ ; et d'autre part car l'élément magnéto sensible est connecté électriquement par un câble souple surmoulé dans le stator sans composant électronique de filtrage associé et sans élément de positionnement garantissant le bon fonctionnement du capteur.

Enfin la configuration de cette vanne conserve l'inconvénient d'avoir un actionneur électrique tubulaire assez long, installé perpendiculaire à l'axe de la soupape, qui confère à la vanne une dissymétrie et pénalise son intégration sur le moteur du véhicule.

Outre les exemples précédents de vanne de dosage utilisant une soupape mobile en translation, on trouve également dans l'état de la technique de nombreuses vannes de dosage utilisant un volet mobile en rotation et obturant un conduit cylindrique. On notera en particulier l'existence du brevet Allemand EP1526272B1 qui décrit une vanne à recirculation de gaz basée sur l'association d'un actionneur électrique, d'un système rotatif à came permettant d'entrainer un volet rotatif pour doser des gaz. Cette solution qui décrit une cinématique singulière installée entre l'organe de commande de l'actionneur électrique et le système de dosage, dans le but de fournir un couple maximal au volet en début de course d'actionnement. Cette solution n'apporte pas d'intérêt particulier concernant la problématique d'encombrement global du système de dosage que nous avons évoqué précédemment.

On connaît également le brevet européen EP1526272 qui décrit une soupape de recirculation des gaz d'échappement, comprenant un entrainement en rotation, un élément de soupape actionnable en rotation enter une position d'ouverture et une position de fermeture, et un élément de came transmettant le mouvement rotatif à l'élément de soupape.

Cette solution n'est pas satisfaisant car elle met en œuvre un galet qui est porté par un levier accouplé à l'axe moteur. Cela occasionne des jeux et un porte-à-faux qui ne permet pas d'assurer une reproductibilité de la position, lorsque l'usure introduit des défauts dimensionnels.

On connaît également les brevet WO89/01105 décrivant une vanne EGR à commande électrique comprenant une tige de soupape positionnée excentriquement à partir d'un axe de rotation et mobile d'une manière sensiblement axiale par rapport à un siège de soupape. Une soupape à champignon est portée par la tige de soupape pour fermer le siège de soupape. Un premier arbre est positionné excentriquement par rapport à l'axe de rotation et reliée à une extrémité de la tige de soupape. Un actionneur commandé électriquement, comme un moteur couple pour faire tourner le premier arbre autour l'axe pour amener la tige de soupape à se déplacer.

On connaît encore le brevet EP1319879 divulguant un détendeur à action directe électrique actionné possède une tige à mouvement alternatif par un moteur électrique.

Dans cette action directe de soupape à commande électrique, en tant que mouvement alternatif tige verticale, un premier passage et un second passage sont commutés. Un mécanisme à came est formée pour convertir le mouvement rotatif alternatif d'une came excentrique qui effectue un mouvement alternatif rotatif par un moteur électrique 40 en mouvement alternatif vertical.

On connaît également le brevet DE10336976 décrivant une vanne comprend un boîtier en deux parties.

La première partie du boîtier présente un canal et le siège de soupape. La seconde partie du boîtier comprend une unité d'asservissement et une tige de soupape.

### Solution apportée par l'invention

L'objet de la présente invention est atteint par un dispositif de dosage présentant les caractéristiques de la revendication 1 et un procédé d'assemblage présentant les caractéristiques de la revendication 11. L'invention revendiquée est caractérisée par le fait que l'ensemble rotorique comprend un galet.

L'ensemble rotorique est défini par :
1. La culasse magnétique
2. Portant un aimant rotorique.

Le galet est donc une partie intégrant de la culasse portant l'aimant rotorique.

L'avantage de cette réalisation est d'éviter les problèmes liés à l'entrainement d'un levier accouplé sur l'arbre moteur. Ces solutions de l'art antérieur se traduisent par différents inconvénients : perte de la précision de la position et de sa répétabilité du fait du jeu pouvant se produire au niveau de l'accouplement du levier sur l'axe moteur, problème d'assemblage et de réglage, augmentation entre la distance entre la butée à bille et palier stator, génération d'efforts efforts radiaux par la cinématique galet / came.

L'invention permet de réduire le porte à faux et de réduire les contraintes induites. Elle conduit donc également à une meilleure robustesse.

Il est donc avantageux de réaliser une vanne de dosage avec un encombrement réduit tout en ayant une bonne fiabilité et une bonne longévité, le tout pour un coût de fabrication le plus réduit possible.

Pour résoudre un ou plusieurs des inconvénients cités précédemment, un dispositif de dosage comprend :
- un corps de vanne muni d'un clapet adapté pour se déplacer entre une position de fermeture et une position d'ouverture,
- un axe de transmission ayant une première extrémité reliée au clapet et une seconde extrémité reliée à un élément de came,
- un actionneur électrique rotatif comprenant un ensemble statorique et un ensemble rotorique rotatif autour d'un axe de rotation, l'ensemble rotorique comprenant :
   - une culasse magnétique portant
   - un aimant rotorique.

En outre, l'ensemble rotorique comprend un galet directement fixé sur la culasse magnétique, excentré par rapport à l'axe de rotation et positionné mobile dans l'élément de came de sorte à transformer le mouvement rotatif de l'ensemble rotorique en un mouvement de l'axe de transmission.

La solution objet de la présente invention permet de simplifier l'architecture de la vanne et d'augmenter la précision du positionnement angulaire entre le galet et l'aimant moteur dans la mesure où l'aimant moteur est directement lié à la culasse et surtout dans la mesure où l'aimant moteur peut être magnétisé sur la culasse comprenant déjà le galet (autrement dit les traces magnétiques de l'aimant moteur sont directement indexées par rapport au galet lors du process d'aimantation et ne dépendent plus de la chaine cinématique « axe / levier rapporté / opération d'assemblage ». Il en résulte une bien meilleure précision de positionnement.

Cette invention permet également de réduire le nombre de pièce et donc le coût en évitant certaines pièces supplémentaires. Un capotage étanche permet de protéger simplement et efficacement la cinématique galet / came.

Surtout, la fixation directe du galet sur la culasse réduit considérablement la distance entre la butée à bille et le palier stator et réduit les efforts radiaux générés par la cinématique galet / came. Le porte à faux est minimal et les contraintes induites également. Il en résulte une meilleure robustesse.

Avantageusement, le dispositif de dosage est basé sur la combinaison d'un actionneur électrique et d'une soupape de dosage et propose une intégration différente de la cinématique de transformation de mouvement et conservant une simplicité de fabrication en grande série. L'invention revendiquée est également caractérisée par le fait que:
- un aimant permanent est fixé sur l'élément de came, l'aimant permanent collaborant avec un élément magnéto sensible fixé sur l'ensemble statorique pour former un capteur de position ; offrant ainsi une solution de capteur de position simple permettant de contrôler la position réelle de la soupape ;
- l'élément de came est réalisé dans un matériau ferromagnétique ; Des caractéristiques ou des modes de réalisation particuliers, utilisables seuls ou en combinaison, sont:
- le capteur de position fonctionne en mode linéaire ;
- l'élément magnéto-sensible est fixé à l'ensemble statorique au moyen d'une structure conductrice rigide ;
- il comprend en outre un ressort de rappel dont une première extrémité est fixée sur l'ensemble statorique et une seconde extrémité est fixée sur l'ensemble rotorique en un point excentré de l'axe de rotation de l'ensemble rotorique ;
- le galet étant mobile en rotation autour d'un nez fixé sur la culasse magnétique, la culasse magnétique, l'axe de l'ensemble rotorique et le nez sont formés dans une seule et même pièce métallique ;
- le clapet et l'axe de transmission se déplacent selon un mouvement de translation ; l'élément de came peut alors comprendre un chemin de roulement sécant à l'axe de transmission et/ou le chemin de roulement être perpendiculaire à l'axe de transmission ; ou
- le clapet et l'axe de transmission se déplacent selon un mouvement de rotation autour de l'axe longitudinal de l'axe de transmission et l'élément de came peut alors comprendre un chemin de roulement permettant de modifier la course angulaire de l'axe de transmission.

Dans un second aspect de l'invention, un procédé d'assemblage d'un dispositif de dosage comme décrit ci-dessus comprend :
- l'axe de transmission et l'élément de came sont fixés ensemble puis le tout est assemblé dans le corps de vanne ;
- le galet est fixé sur la culasse magnétique ; puis
- le galet est positionné face à l'élément de came puis
- l'actionneur électrique est plaqué et fixé contre le corps de vanne.

Dans un mode particulier de réalisation de ce procédé, l'aimant rotorique est magnétisé après fixation de celui-ci sur la culasse.

Ainsi, avantageusement, le sens de montage du moteur couple est inversé par rapport à la soupape de dosage de façon à exploiter non pas l'axe central du rotor de l'actionneur mais directement le mouvement de la culasse magnétique comme organe de sortie de l'actionneur, cette culasse magnétique porte un galet roulant collaborant avec élément de came lié à la soupape à piloter. Cela présente un intérêt important en termes de compacité car la hauteur de l'actionneur électrique se trouve sensiblement réduite et le système de dosage gagne en compacité. De plus cela permet d'assurer une étanchéité totale de la vanne car le stator du moteur couple est totalement surmoulé sur la partie arrière, et ne comporte plus de couvercle rapporté comme c'était le cas dans les solutions connues. En effet des couvercles plastiques peuvent présenter des défauts de liaison avec le stator et conduire à une intrusion d'humidité dans la partie avant de l'actionneur. En cas de besoin, un joint d'étanchéité peut être installé.

### Description détaillée d'un exemple de réalisation de l'invention

L'invention sera mieux comprise à la lecture de la description qui suit, faite uniquement à titre d'exemple, et en référence aux figures en annexe dans lesquelles :

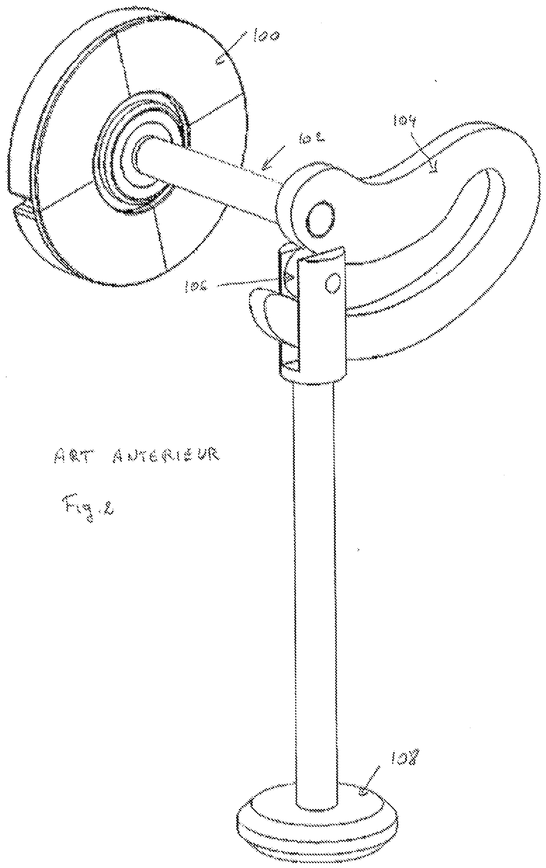

- les figures 1 à 3 sont les vues schématiques d'un dispositif de dosage selon l'art antérieur ;
- la figure 4 est une vue en perspective de face d'un premier mode de réalisation ;
- la figure 5 est une vue en perspective de dessus du premier mode de réalisation ;
- la figure 6 est une vue de face d'un premier mode de fonctionnement du premier mode de réalisation avec le graphique d'effort associé ;
- la figure 7 est une vue de face d'un second mode de fonctionnement du premier mode de réalisation avec le graphique d'effort associé ;
- la figure 8 est une vue de côté du premier mode de réalisation ;
- la figure 9 est une vue en perspective de face d'un deuxième mode de réalisation ;
- la figure 10 est une vue en perspective de face d'un troisième mode de réalisation ; et
- la figure 11 est une coupe en perspective de face du troisième mode de réalisation.

Dans l'ensemble de la description et des dessins, une même référence désigne un élément identique ou similaire par sa fonction.

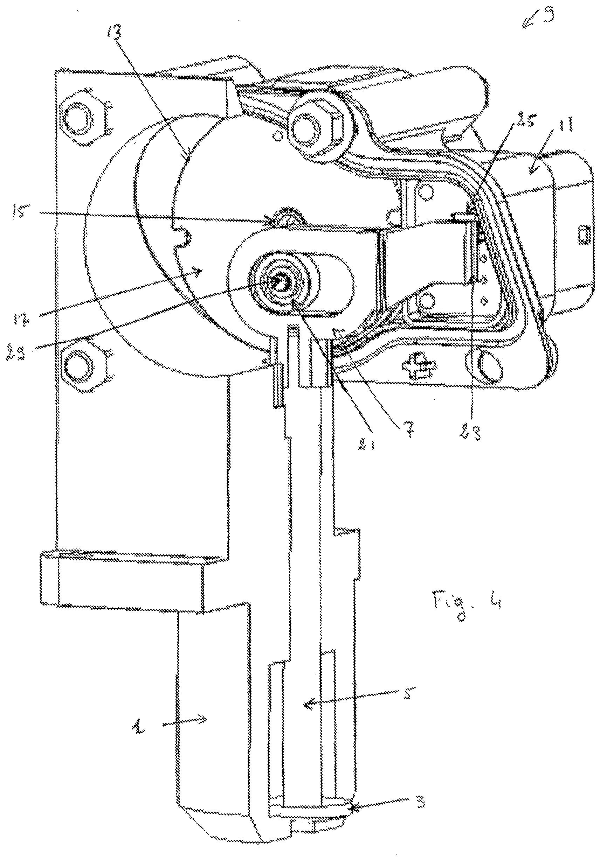

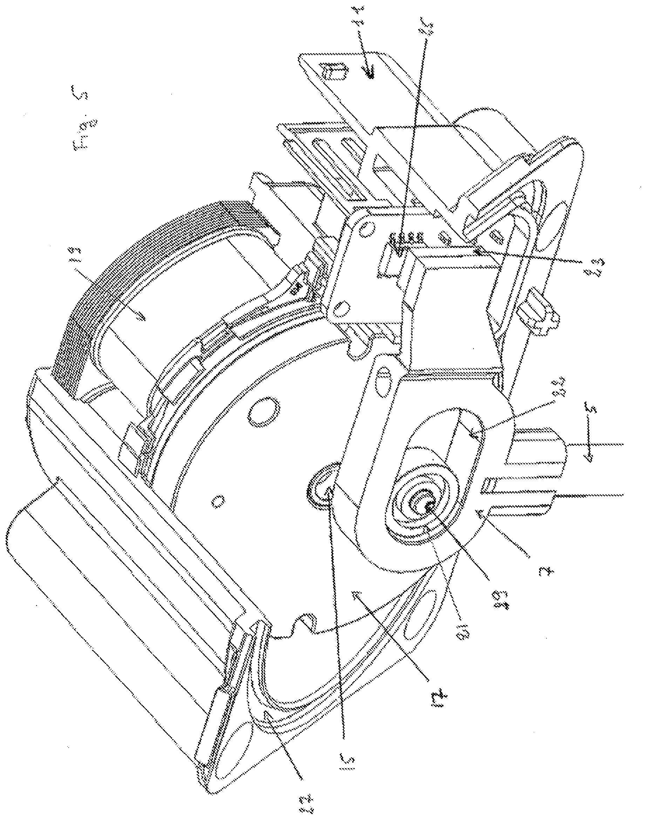

En référence aux figures 4 et 5, un premier mode de réalisation est présenté dans lequel le mouvement de la soupape est linéaire.

Le dispositif de dosage comprend un corps de vanne 1 muni d'un clapet 3 adapté pour se déplacer entre une position de fermeture et une position d'ouverture (le clapet et en position fermeture sur la figure).

Un axe de transmission 5 a une première extrémité reliée au clapet 3 et une seconde extrémité reliée à un élément de came 7.

Un actionneur électrique rotatif 9 comprend un ensemble statorique 11 et un ensemble rotorique 13 rotatif autour d'un axe de rotation 15.

L'ensemble rotorique 13 comprend une culasse magnétique 17 portant un aimant rotorique 19.

Il comprend également un galet roulant 21 fixé sur la culasse magnétique 17. Le galet 21 est excentré par rapport à l'axe de rotation 15 et positionné mobile dans l'élément de came 7. En particulier, le galet 21 se déplace dans un chemin de roulement 22 de l'élément de came 7.

L'élément de came 7 est réalisé dans un matériau ferromagnétique et porte un émetteur de champ magnétique 23 qui est détecté par un élément magnéto sensible 25 solidaire du stator 11 de l'actionneur électrique 9, l'émetteur de champ magnétique 23 et l'élément magnéto sensible 25 formant un capteur de position.

La chaine cinématique, qui transmet le mouvement de l'aimant moteur 19 au clapet 3, est réduite à son maximum et permet de réduire la hauteur de l'actionneur et d'obtenir une vanne de dosage compact et facile à intégrer. Cette solution permet aussi de réduire le nombre des composants et donc les coûts de fabrication du dispositif de dosage.

La transmission du couple créé au niveau de l'aimant rotorique 19 se transmets au galet 21 sans passer au travers par l'axe de guidage 15 et l'on s'affranchit ainsi de la torsion de cet axe 15, qui, avec les solutions de l'art antérieur, induisait une perte de précision dans la chaine cinématique, et donc sur le positionnement du clapet 3.

L'émetteur de champ magnétique 23 est fixé sur l'élément de came 7, lequel est réalisé dans un matériau ferromagnétique. Cela permet d'atteindre un niveau d'induction magnétique assez élevé à l'emplacement de l'élément magnéto sensible 25 pour garantir une insensibilité du capteur de position aux perturbations magnétiques extérieures. De plus, l'élément magnéto sensible 25 est fixé à l'ensemble statorique 11 par une structure conductrice rigide. Le capteur de position programmé pour fonctionner en mode linéaire permet de contrôler précisément la position du clapet 3 tout au long de sa course et donc une régulation précise du débit du dispositif de dosage.

Le stator surmoulé en plastique 11 est fermé sur la partie arrière et possède une gorge 27 recevant un joint sur la partie avant, de sorte que la liaison entre l'actionneur électrique 9 et le corps 1 de la vanne de dosage est totalement étanche.

L'opération de fixation du galet 21 sur la culasse 17 est beaucoup plus simple que les solutions connues, parce que basée sur un emmanchement traditionnel sur un axe rigide, ou nez, 29. L'ensemble de la culasse magnétique 17, de l'axe de rotation 15 et du nez 29 peuvent d'ailleurs être formés dans une même pièce métallique.

L'ensemble composé de l'axe de transmission 5 et de l'élément de came 7 peut être assemblé indépendamment sans difficulté puis installé dans le corps de vanne 1 avant de venir souder le clapet 3 en ajustant sa position.

Le calage angulaire de la course électrique et de la course mécanique de l'actionneur est facilité par un positionnement précis du galet 21 sur la culasse 17 mais aussi par la fixation de l'aimant rotorique 19 sur cette culasse 17. On note d'ailleurs qu'il est possible de magnétiser l'aimant 19 après fixation de ce dernier sur la culasse 17, de façon à améliorer l'orientation angulaire des transitions multipolaires par rapport au galet roulant 21 et optimiser la précision du dispositif de dosage.

Enfin, ce mode de réalisation permet un assemblage simple de l'actionneur électrique 9 sur le dispositif de dosage. Il suffit en effet de positionner le galet 21 face au chemin de roulement 22 de la came 7, puis de plaquer et fixer l'actionneur 9 contre le corps de vanne 1.

On remarque que, selon que le galet 21 se trouve dans le quadrant supérieur ou le quadrant inférieur en départ de course angulaire du rotor, et en fonction de la forme du profil de came 7, on peut créer un profil de force sur l'axe de soupape 5 qui est indifféremment croissant ou décroissant au cours de la course de déplacement, et ce en fonction des besoins de l'application du dispositif de dosage.

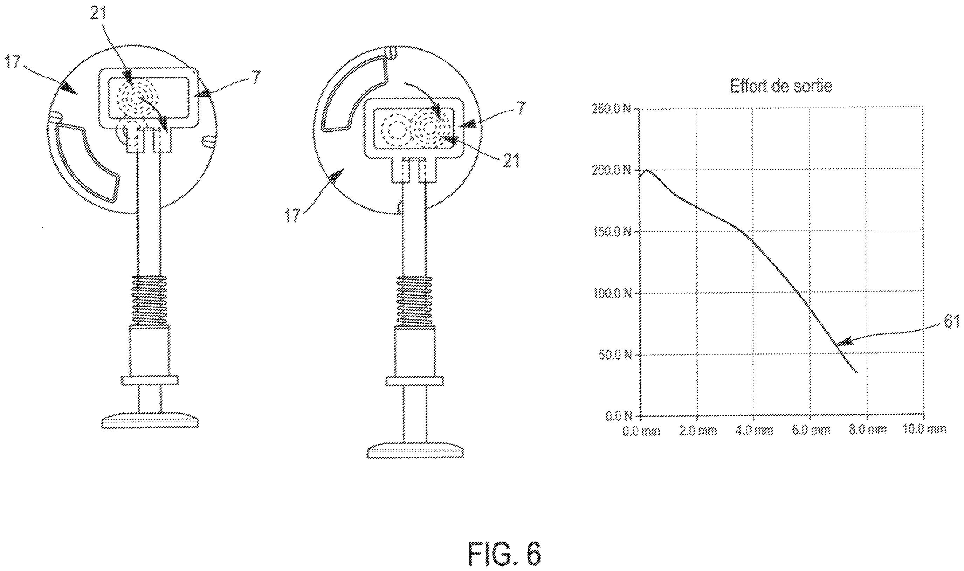

La figure 6 représente la culasse magnétique 17 équipée du galet roulant 21 collaborant avec l'élément de came 7. Le chemin de roulement 22 est droit et l'axe de roulement est sécant à l'axe de transmission, plus particulièrement perpendiculaire à celui-ci. Le galet 21 et l'élément de came 7 fonctionnent dans le quadrant supérieur droit de façon à obtenir un maximum de force en début de course comme l'indique le graphique de force 61, laquelle force est transmise à l'axe de transmission 5 solidaire du clapet 3.

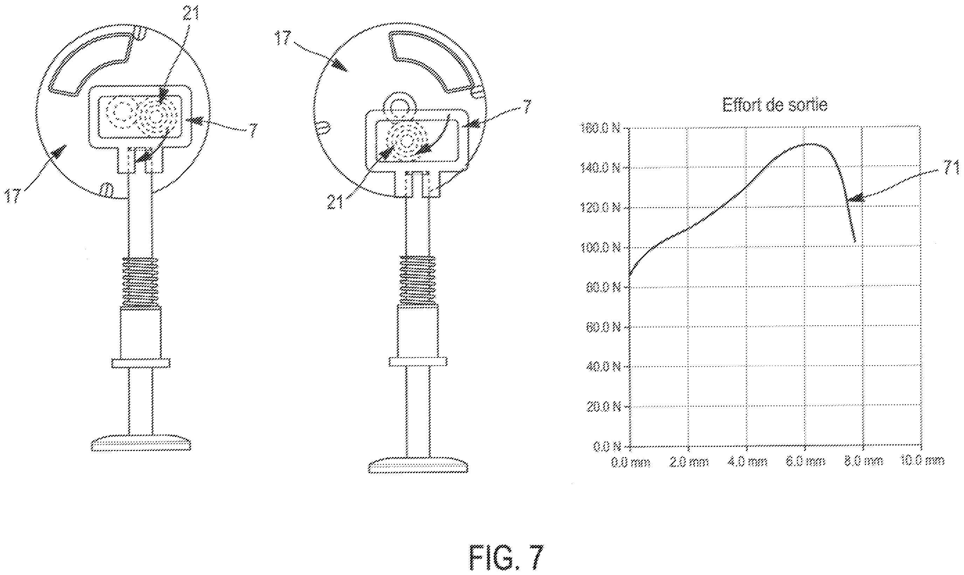

La figure 7 représente la culasse magnétique 17 équipée du galet roulant 21 collaborant avec l'élément de came 7 comme dans la figure précédente mais qui fonctionne dans le quadrant inférieur droit de façon à obtenir un maximum de force en fin de course, comme le montre le graphique de force 71, laquelle force est transmise à l'axe de transmission 5 solidaire du clapet 3.

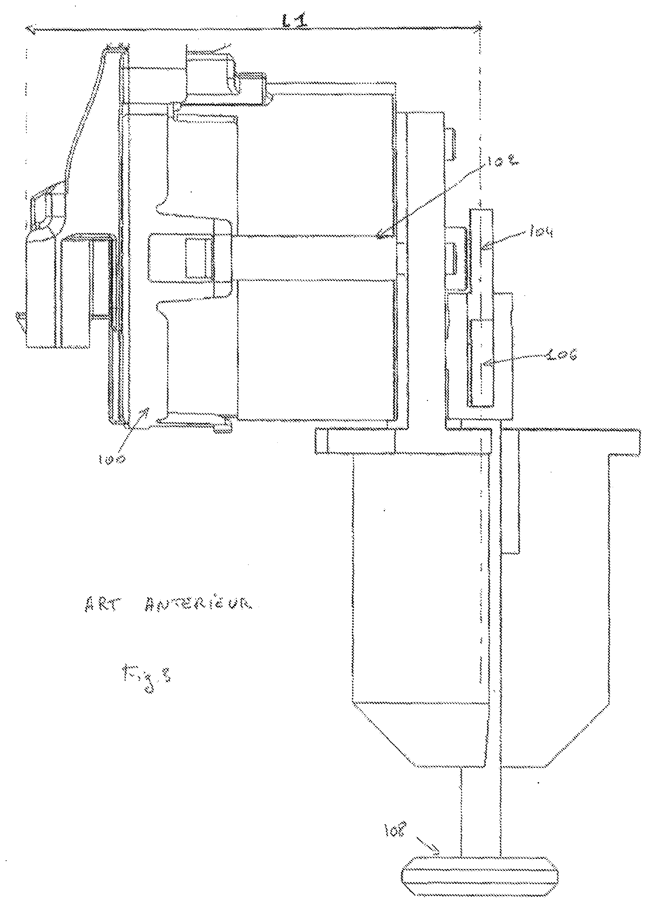

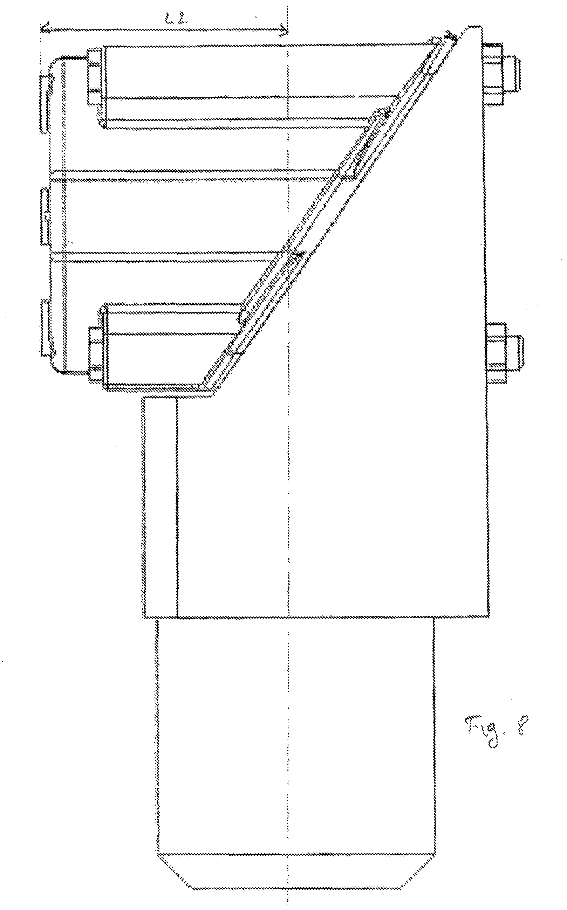

La figure 8 présente une vue de côté du dispositif décrit et permet une comparaison de l'encombrement radial avec dispositif de dosage selon l'art antérieur tel que montré en figure 3. La dimension nommée « L2 » représente l'encombrement radial mesuré entre la face arrière du moteur et l'axe de symétrie de la vanne de dosage dans le cas du mode de réalisation décrit ci-dessus. Cette dimension est réduite de 40% en comparaison de la dimension notée « L1 » correspondant à l'encombrement de la solution connue de la technique. Cette réduction importante du déport de l'actionneur électrique 9 induit d'une part une vanne plus compacte et facile à intégrer sur le moteur du véhicule, et d'autre part une meilleure résistance aux vibrations, car le centre de gravité du moteur est rapproché de celui du corps de vanne qui le supporte.

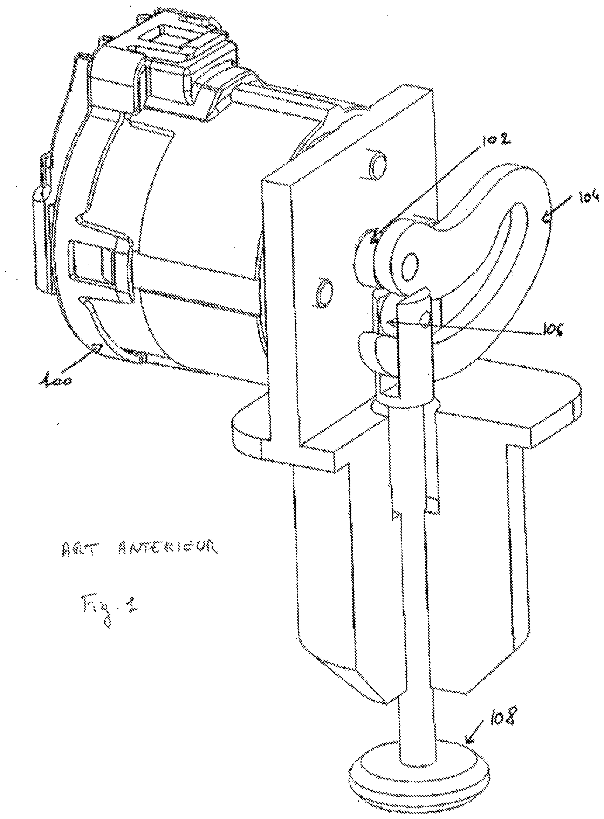

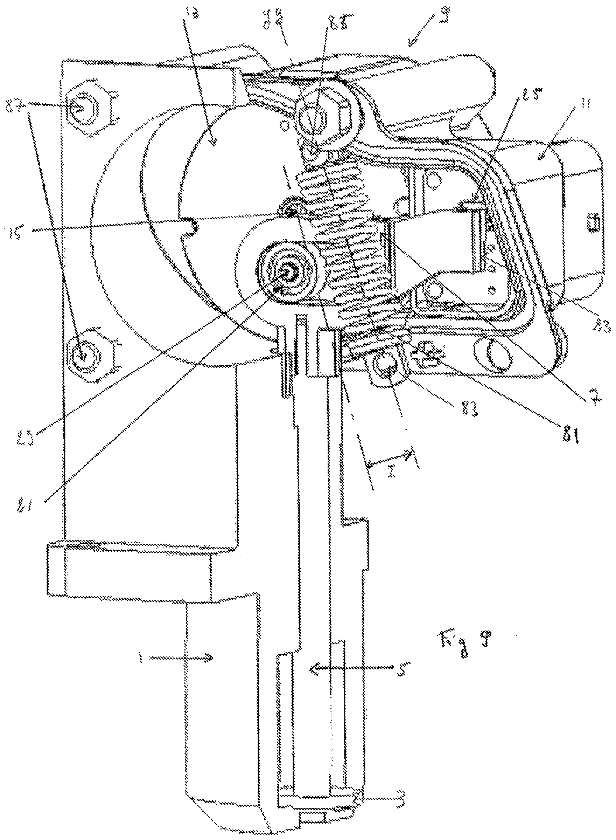

La figure 9 est une vue en perspective d'un second mode de réalisation, qui se distingue de la solution des figures 1A et 1B par l'ajout d'un ressort de rappel 81 en position de référence, qui se superpose au couple produit au niveau de la culasse 17. Le ressort de rappel est attaché entre un point fixe 83 lié au stator 11 ou au corps de vanne 1 et un point mobile 85 fixé sur l'ensemble rotorique 13 ou sur l'élément de came 7 en un point excentré de l'axe de rotation 15 de l'ensemble rotorique 13, de sorte que la ligne d'action yy dudit ressort 81 est mobile par rapport à l'axe de rotation 15 de la culasse 17 au cours du déplacement du clapet de soupape 3. Le bras de levier « l » du ressort 81 par rapport à l'axe de rotation 15 de la culasse 17 varie au cours du déplacement du clapet 3 de sorte que le couple de rappel présente une caractéristique non linaire.

Ce couple de rappel non linaire permet d'assurer une fonction de rappel en position de référence (par exemple vanne fermée), et présente un couple de rappel réduit dans l'autre position extrême de vanne (par exemple en position ouverte), de manière à faciliter le maintien de cette seconde position avec un faible courant électrique. Cet avantage permet d'une part de réduire la consommation de courant prélevé sur la batterie, mais aussi de protéger le moteur des surchauffes induites par l'effet Joule interne aux bobines, cumulé à la température ambiante.

La dissipation thermique de la chaleur produite au niveau des bobines de l'actionneur électrique 9 peut également être améliorée en utilisant des éléments de fixation 87 composé d'un matériau thermiquement bon conducteur, pour fixer l'actionneur électrique 9 sur le corps de vanne 1 lorsque ce dernier bénéficie d'un refroidissement externe. En revanche lorsque le corps de vanne présente une température élevée et qu'il est préférable d'isoler thermiquement l'actionneur électrique 9 du corps de vanne 1 sur lequel il s'appuie, la fixation de l'actionneur électrique 9 sera préférentiellement réalisée par des oreilles non métallique.

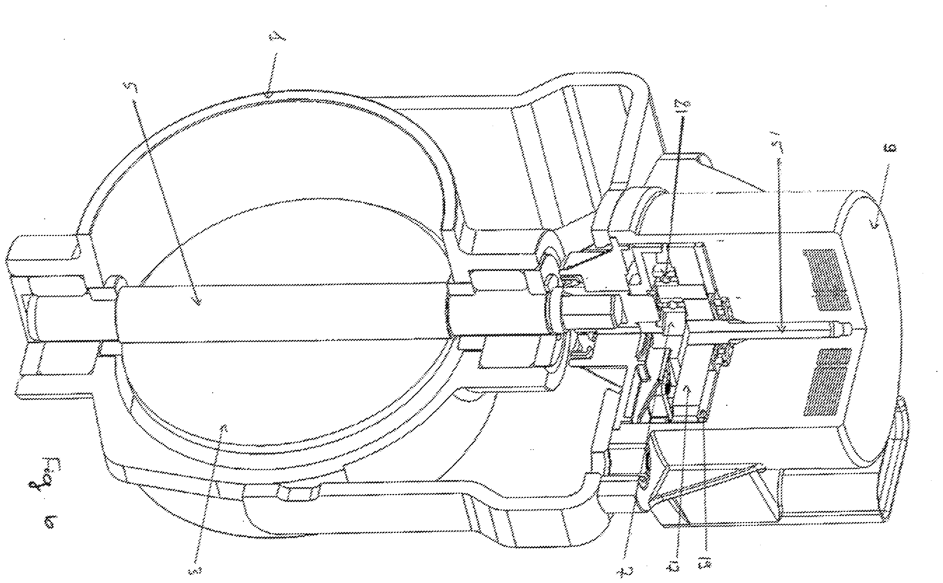

La figure 10 est une vue en perspective d'un troisième mode de réalisation du dispositif de dosage, dans lequel le clapet 3 est animé d'un mouvement rotatif dans un corps de vanne 1 de forme tubulaire, de façon à réguler le débit des gaz. L'actionneur électrique 9 comporte un rotor 13 composé d'un aimant disque 19 et d'une culasse magnétique 17, laquelle transmets un mouvement rotatif, au moyen du galet 21, à l'élément de came 7 mobile en rotation autour de l'axe 5 portant le clapet 3 de sorte que la rotation de ce clapet 3 permet d'effectuer un dosage du fluide qui circule à l'intérieur du corps de vanne 1.

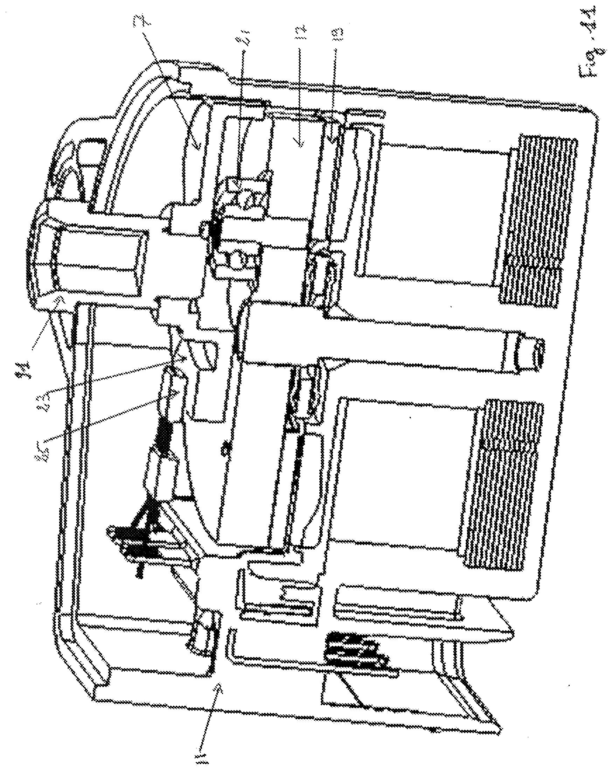

Cette vanne de dosage par volet rotatif se caractérise par une cinématique de transmission très intégrée, et permet d'améliorer la compacité globale de la vanne en optimisant la hauteur de l'ensemble actionneur plus cinématique. L'élément de came 7 dont le profil du chemin de roulement peut être courbe, est mobile en rotation et attaché à l'axe de soupape 5 au moyen d'un moyeu 91, figure 11. La forme du chemin de roulement de l'élément de came 7 est choisi pour amplifier l'angle de rotation de l'axe de transmission soit en augmentant l'amplitude angulaire, soit en augmentant le couple en fonction de l'utilisation envisagée.

L'aimant permanent 23 attaché à l'élément de came 7 réagi avec l'élément magnéto sensible 25 qui est solidaire du stator 11. Le capteur de position rotatif ainsi créé, permet de connaitre la position angulaire du clapet 3 et de réguler ainsi le débit du dispositif de dosage.

L'invention a été illustrée et décrite en détail dans les dessins et la description précédente. Celle-ci doit être considérée comme illustrative et donnée à titre d'exemple et non comme limitant l'invention a cette seule description. L'objet de la protection demandée est défini par les revendications annexées.

## Revendications

1. Dispositif de dosage comprenant :
• un corps de vanne (1) muni d'un clapet (3) adapté pour se déplacer entre une position de fermeture et une position d'ouverture,
• un axe de transmission (5) ayant une première extrémité reliée au clapet et une seconde extrémité reliée à un élément de came (7),
• un actionneur électrique rotatif (9) comprenant un ensemble statorique (11) et un ensemble rotorique (13) rotatif autour d'un axe de rotation (15), l'ensemble rotorique (13) comprenant :
• une culasse magnétique (17) portant
• un aimant rotorique (19) ;
**caractérisé en ce que** l'ensemble rotorique (13) comprend en outre un galet (21) directement fixé sur la culasse magnétique (17), excentré par rapport à l'axe de rotation (15) et positionné mobile dans l'élément de came (7) de sorte à transformer le mouvement rotatif de l'ensemble rotorique (13) en un mouvement de l'axe de transmission (5), **en ce qu'**un aimant permanent (23) est fixé sur l'élément de came (7), l'aimant permanent (23) collaborant avec un élément magnéto sensible (25) fixé sur l'ensemble statorique (11) pour former un capteur de position, **en ce que** l'élément de came (7) est réalisé dans un matériau ferromagnétique.

2. Dispositif selon la revendication 1, **caractérisé en ce que** le capteur de position fonctionne en mode linéaire.

3. Dispositif selon l'une quelconque des revendications précédentes , **caractérisé en ce que** l'élément magnéto-sensible (25) est fixé à l'ensemble statorique (11) au moyen d'une structure conductrice rigide.

4. Dispositif selon l'une quelconque des revendications précédentes, **caractérisé en ce qu'**il comprend en outre un ressort de rappel (81) dont une première extrémité est fixée sur l'ensemble statorique (11) et une seconde extrémité est fixée sur l'ensemble rotorique (13) en un point excentré de l'axe de rotation (15) de l'ensemble rotorique.

5. Dispositif selon l'une quelconque des revendications précédentes, **caractérisé en ce que**, le galet étant mobile en rotation autour d'un nez fixé sur la culasse magnétique, la culasse magnétique, l'axe de l'ensemble rotorique et le nez sont formés dans une seule et même pièce métallique.

6. Dispositif selon l'une quelconque des revendications précédentes, **caractérisé en ce que** le clapet et l'axe de transmission se déplacent selon un mouvement de translation.

7. Dispositif selon la revendication précédente, **caractérisé en ce que** l'élément de came comprend un chemin de roulement sécant à l'axe de transmission.

8. Dispositif selon la revendication précédente, **caractérisé en ce que** le chemin de roulement est perpendiculaire à l'axe de transmission.

9. Dispositif selon l'une quelconque des revendications précédentes, **caractérisé en ce que** le clapet et l'axe de transmission se déplacent selon un mouvement de rotation autour de l'axe longitudinal de l'axe de transmission.

10. Dispositif selon la revendication précédente **caractérisé en ce que** l'élément de came comprend un chemin de roulement permettant de modifier la course angulaire de l'axe de transmission.

11. Procédé d'assemblage d'un dispositif de dosage selon l'une quelconque des revendications précédentes, **caractérisé en ce que** :
• l'axe de transmission et l'élément de came sont fixés ensemble puis le tout est assemblé dans le corps de vanne ;
• le galet est fixé sur la culasse magnétique ; puis
• le galet est positionné face à l'élément de came puis
• l'actionneur électrique est plaqué et fixé contre le corps de vanne.

12. Procédé d'assemblage selon la revendication 11, **caractérisé en ce que** l'aimant rotorique est magnétisé après fixation de celui-ci sur la culasse.

## Patentansprüche

1. Dosiervorrichtung, umfassend:
• einen Ventilkörper (1), der mit einer Klappe (3) versehen ist, die zum Bewegen zwischen einer geschlossenen Position und einer offenen Position geeignet ist,
• eine Übertragungswelle (5), aufweisend eines mit der Klappe verbundenen ersten Ende und eines mit einem Nockenelement (7) verbundenen zweiten Ende,
• einen drehbaren elektrischen Aktuator (9), der eine Statorbaugruppe (11) und eine Rotorbaugruppe (13) umfasst, die um eine Drehachse (15) drehbar ist, wobei die Rotorbaugruppe (13) umfasst:
• ein Magnetjoch (17), das
• einen Rotormagneten (19) trägt;
**dadurch gekennzeichnet, dass** die Rotorbaugruppe (13) ferner eine Rolle (21) umfasst, die direkt an dem Magnetjoch (17) befestigt ist, exzentrisch in Bezug auf die Drehachse (15) ist und beweglich in dem Nockenelement (7) positioniert ist, um die Drehbewegung der Rotorbaugruppe (13) in eine Bewegung der Übertragungswelle (5) umzuwandeln, dass ein Permanentmagnet (23) an dem Nockenelement (7) befestigt ist, wobei der Permanentmagnet (23) mit einem magnetoempfindlichen Element (25), das an der Statorbaugruppe (11) befestigt ist, zusammenwirkt, um einen Positionssensor zu bilden, dass das Nockenelement (7) aus einem ferromagnetischen Material hergestellt ist.

2. Vorrichtung nach Anspruch 1, **dadurch gekennzeichnet, dass** der Positionssensor im Linearmodus arbeitet.

3. Vorrichtung nach einem der vorhergehenden Ansprüche, **dadurch gekennzeichnet, dass** das magnetoempfindliche Element (25) mittels einer starren leitenden Struktur an der Statorbaugruppe (11) befestigt ist.

4. Vorrichtung nach einem der vorhergehenden Ansprüche, **dadurch gekennzeichnet, dass** sie ferner eine Rückstellfeder (81) umfasst, deren erstes Ende an der Statorbaugruppe (11) und deren zweites Ende an der Rotorbaugruppe (13) an einem Punkt befestigt ist, der exzentrisch zur Drehachse (15) der Rotorbaugruppe liegt.

5. Vorrichtung nach einem der vorhergehenden Ansprüche, **dadurch gekennzeichnet, dass** die Rolle um eine am Magnetjoch befestigte Nase drehbar ist, wobei das Magnetjoch, die Welle der Rotoreinheit und die Nase aus ein und demselben Metallteil gebildet sind.

6. Vorrichtung nach einem der vorhergehenden Ansprüche, **dadurch gekennzeichnet, dass** sich die Klappe und die Übertragungswelle translatorisch bewegen.

7. Vorrichtung nach dem vorhergehenden Anspruch, **dadurch gekennzeichnet, dass** das Nockenelement eine Laufbahn aufweist, die die Übertragungswelle schneidet.

8. Vorrichtung nach dem vorhergehenden Anspruch, **dadurch gekennzeichnet, dass** die Laufbahn senkrecht zur Übertragungswelle verläuft.

9. Vorrichtung nach einem der vorhergehenden Ansprüche, **dadurch gekennzeichnet, dass** sich die Klappe und die Übertragungswelle in einer Rotationsbewegung um die Längsachse der Übertragungswelle bewegen.

10. Vorrichtung nach dem vorhergehenden Anspruch, **dadurch gekennzeichnet, dass** das Nockenelement eine Laufbahn zum Verändern des Winkelhubs der Übertragungswelle umfasst.

11. Verfahren zum Zusammenbauen einer Dosiervorrichtung nach einem der vorhergehenden Ansprüche, **dadurch gekennzeichnet, dass**:
• die Übertragungswelle und das Nockenelement miteinander befestigt sind und dann das Ganze in den Ventilkörper montiert ist;
• die Rolle an dem Magnetjoch befestigt ist; und dann
• die Rolle gegenüber dem Nockenelement positioniert ist und dann
• der elektrische Aktuator gegen den Ventilkörper gedrückt und befestigt ist.

12. Montageverfahren nach Anspruch 11, **dadurch gekennzeichnet, dass** der Rotormagnet magnetisiert ist, nachdem er am Joch befestigt worden ist.

## Claims

1. Metering device comprising:
• a valve body (1) provided with a valve (3) suitable for moving between a closed position and an open position,
• a transmission shaft (5) having a first end connected to the valve and a second end connected to a cam element (7),
• a rotary electric actuator (9) comprising a stator assembly (11) and a rotor assembly (13) which rotates about a rotary shaft (15), the rotor assembly (13) comprising:
• a magnetic yoke (17) which supports
• a rotor magnet (19);
**characterized in that** the rotor assembly (13) also comprises a roller (21) which is directly fixed on the magnetic yoke (17), is eccentric with respect to the rotary shaft (15) and is movably positioned in the cam element (7) so as to transform the rotary movement of the rotor assembly (13) into a movement of the transmission shaft (5), **in that** a permanent magnet (23) is fixed on the cam element (7), the permanent magnet (23) collaborating with a magneto-sensitive element (25) fixed on the stator assembly (11) to form a position sensor, and **in that** the cam element (7) is made of a ferromagnetic material.

2. Device according to claim 1, **characterized in that** the position sensor operates in a linear mode.

3. Device according to either of the preceding claims, **characterized in that** the magneto-sensitive element (25) is fixed to the stator assembly (11) by a rigid conductive structure.

4. Device according to any of the preceding claims, **characterized in that** it also comprises a return spring (81), of which a first end is fixed on the stator assembly (11) and a second end is fixed on the rotor assembly (13) at an eccentric point of the rotary shaft (15) of the rotor assembly.

5. Device according to any of the preceding claims, **characterized in that**, with the roller being rotatable about a nose fixed on the magnetic yoke, the magnetic yoke, the shaft of the rotor assembly and the nose are formed in a single metal part.

6. Device according to any of the preceding claims, **characterized in that** the valve and the transmission shaft move in a translational movement.

7. Device according to the preceding claim, **characterized in that** the cam element comprises a raceway that intersects the transmission shaft.

8. Device according to the preceding claim, **characterized in that** the raceway is perpendicular to the transmission shaft.

9. Device according to any of the preceding claims, **characterized in that** the valve and the transmission shaft move in a rotational movement about the longitudinal axis of the transmission shaft.

10. Device according to the preceding claim, **characterized in that** the cam element comprises a raceway which makes it possible to modify the angular travel of the transmission shaft.

11. Method for assembling a metering device according to any of the preceding claims, **characterized in that**:
• the transmission shaft and the cam element are fixed together, and then the whole is assembled in the valve body;
• the roller is fixed on the magnetic yoke; and then
• the roller is positioned facing the cam element, and then
• the electric actuator is pressed and fixed against the valve body.

12. Assembly method according to claim 11, **characterized in that** the rotor magnet is magnetized after being fixed on the yoke.
